# EUROPEAN PATENT APPLICATION

(11) **EP 3 428 467 A1**
(43) Date of publication of application: **16.01.2019**
(21) Application number: 17763326.0
(22) Date of filing: 08.03.2017
(51) Int. Cl.: F16C 33/64, B21D 22/20, B21D 24/16, B21D 28/00, B21D 28/02, B21D 53/10, C21D 1/18, C21D 1/76, C21D 9/40, F16C 19/36, F16C 19/44

(54) **BEARING RING MANUFACTURING METHOD**

(30) Priority: 11.03.2016 JP 2016048337
(71) Applicant: NTN Corporation, Osaka-shi, Osaka 550-0003 (JP)
(72) Inventor: MIZUTA, Kohei, Kuwana-shi Mie 511-0867 (JP); OHKI, Chikara, Kuwana-shi Mie 511-0867 (JP)
(74) Representative: Bockhorni & Brüntjen Partnerschaft Patentanwälte mbB
(86) International application number: PCT/JP2017/009282
(87) International publication number: WO 2017/154986

(57) **Abstract**

A method of manufacturing a rolling bearing ring in which an increase in surface roughness is suppressed as compared with a steel material is provided. The method includes: the step (S0) of preparing a steel material and a work portion for obtaining a rolling bearing ring from the steel material; the step (S2) of placing the steel material on the work portion; and the steps (S3 to S13) of obtaining the rolling bearing ring by heating the steel material on the work portion to a temperature equal to or higher than an A₁ transformation point, thereafter punching a part of the steel material into a ring shape, and thereafter quenching the steel material in a ring shape on the work portion. In the step of obtaining the rolling bearing ring, heating and punching are performed in the state where oxidation of the steel material is suppressed, and in the state where tensile force is applied between the first portion and the second portion in the steel material that are spaced apart from each other with the work portion interposed therebetween in at least one direction along a main surface of the steel material.

## Description

### TECHNICAL FIELD

The present invention relates to a method of manufacturing a rolling bearing ring.

### BACKGROUND ART

A rolling bearing ring of a thrust needle bearing has conventionally been manufactured in steps below. First, a rolled steel material formed in a thin plate is wound in a coiled shape to thereby prepare a coil material. Then, the thin-plate steel material unwound from the coil material is sequentially punched and formed. Thus, a formed object in a ring shape having an approximate shape of a rolling bearing ring is obtained. Then, a setup step before heat treatment is performed. Then, the formed object in a ring shape is subjected to heat treatment such as carburization. Thereafter, the formed object is cooled with air blast, thereby quenching the formed object. Finally, the quenched formed object is press-tempered (tempered), thereby shaping the formed object. Through the steps as described above, a rolling bearing ring of a thrust needle bearing is manufactured.

Also, die quenching has been known as a technique for forming a steel material. Die quenching is a technique for press-forming a heated steel material and simultaneously quenching the steel material by rapidly cooling the steel material in a die (for example, Japanese Patent Laying-Open No. 2008-296262 (PTD 1)).

### CITATION LIST

### PATENT DOCUMENT

PTD 1: Japanese Patent Laying-Open No. 2008-296262

### SUMMARY OF INVENTION

### TECHNICAL PROBLEM

By die quenching as described above, however, an oxide film (oxide scale) is formed by heating on the surface of the pressed steel material. Due to the oxide film formed on the surface of the steel material, the surface roughness of the rolling bearing ring obtained by die-quenching the steel material may become higher than the surface roughness of the steel material before pressing.

The present invention has been made to solve the above-described problems. A main object of the present invention is to provide a method of manufacturing a rolling bearing ring in which an increase in surface roughness is suppressed as compared with a steel material.

### SOLUTION TO PROBLEM

A method of manufacturing a rolling bearing ring according to the present invention includes: preparing a steel material and a forming table for obtaining the rolling bearing ring from the steel material; placing the steel material on the forming table; and obtaining the rolling bearing ring by heating the steel material on the forming table to a temperature equal to or higher than an A₁ transformation point, thereafter punching a part of the steel material into a ring shape, and thereafter quenching the steel material in a ring shape on the forming table. In the obtaining the rolling bearing ring, the heating and the punching are performed in a state where oxidation of the steel material is suppressed, and in a state where tensile force is applied between a first portion and a second portion in the steel material that are spaced apart from each other with the forming table interposed therebetween in at least one direction along a surface of the steel material.

### ADVANTAGEOUS EFFECTS OF INVENTION

According to the present invention, it becomes possible to provide a method of manufacturing a rolling bearing ring in which an increase in surface roughness is suppressed as compared with a steel material.

### BRIEF DESCRIPTION OF DRAWINGS

Fig. 1 is a schematic cross-sectional view showing the configuration of a thrust needle roller bearing according to a present embodiment.
Fig. 2 is a flowchart schematically showing a method of manufacturing a rolling bearing ring according to the present embodiment.
Fig. 3 is a diagram showing (A) change over time in current supplied to a steel material, (B) change over time in temperature of the steel material, (C) a stroke movement of a press machine, (D) an operation of a hydraulic chuck or a pneumatic chuck, and (E) operations of a first clamping portion and a second clamping portion, in the method of manufacturing a rolling bearing ring according to the present embodiment.
Fig. 4 is a schematic perspective view showing a coil material used in the method of manufacturing a rolling bearing ring according to the present embodiment.
Fig. 5 is a schematic side view showing the configuration of a machine part manufacturing apparatus used in the method of manufacturing a rolling bearing ring according to the present embodiment.
Fig. 6 is a block diagram showing the configuration of the machine part manufacturing apparatus used in the method of manufacturing a rolling bearing ring according to the present embodiment.
Fig. 7 is a schematic cross-sectional view showing the state where a steel material is placed on a press machine in the method of manufacturing a rolling bearing ring according to the present embodiment.
Fig. 8 is a schematic cross-sectional view showing the state where a current is supplied from a power feed terminal to the steel material in the method of manufacturing a rolling bearing ring according to the present embodiment.
Fig. 9 is a schematic cross-sectional view showing the state where the steel material is punched by the press machine in the method of manufacturing a rolling bearing ring according to the present embodiment.
Fig. 10 is a schematic cross-sectional view showing the state where the steel material punched into a ring shape is subjected to forming in the method of manufacturing a rolling bearing ring according to the present embodiment.
Fig. 11 is a schematic cross-sectional view showing the state where the steel material punched into a ring shape is quenched in the method of manufacturing a rolling bearing ring according to the present embodiment.
Fig. 12 is a schematic plan view showing a water cooling circuit provided in the press machine used in the method of manufacturing a rolling bearing ring according to the present embodiment.
Fig. 13 is a schematic diagram for illustrating a method of applying tensile force to the steel material by using a portion for supplying the steel material.
Fig. 14 is a schematic diagram for illustrating a method of applying tensile force to the steel material by using a portion for correcting the steel material.
Fig. 15 is a schematic diagram for illustrating a heating method using electrical heating.
Fig. 16 is a schematic diagram for illustrating a heating method using indirect resistance heating.
Fig. 17 is a schematic diagram for illustrating a heating method using induction heating.
Fig. 18 is a schematic diagram for illustrating a heating method using contact heat transfer.
Fig. 19 is a schematic cross-sectional view for illustrating a modification of the method of manufacturing a rolling bearing ring according to the present embodiment.
Fig. 20 shows a photograph of the machine part manufacturing apparatus used for manufacturing a rolling bearing ring according to an example.
Fig. 21 shows a photograph of a rolling bearing ring according to the example.
Fig. 22 shows a photograph of a steel structure in the rolling bearing ring according to the example.

### DESCRIPTION OF EMBODIMENTS

Embodiments of the present invention will be hereinafter described with reference to the accompanying drawings, in which the same or corresponding components are designated by the same reference characters, and description thereof will not be repeated.

### <Configuration of Thrust Needle Roller Bearing 1>

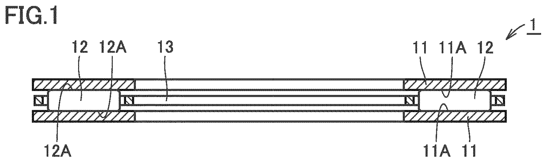

The configuration of a thrust needle roller bearing 1 according to the present embodiment will be first described. Fig. 1 shows a structure in a cross-section along the axial direction of thrust needle roller bearing 1. Referring to Fig. 1, thrust needle roller bearing 1 mainly has a pair of rolling bearing rings 11, a plurality of needle rollers 12, and a cage 13.

Rolling bearing ring 11 is composed, for example, of steel with a carbon concentration equal to or greater than 0.4 mass %, and is formed in a disc shape. Rolling bearing ring 11 has, at its one main surface, a rolling bearing ring raceway surface 11A with which needle roller 12 is in contact. The pair of rolling bearing rings 11 is arranged such that rolling bearing ring raceway surfaces 11A face each other. Rolling bearing ring 11 has Vickers hardness equal to or greater than 700 HV. The flatness in rolling bearing ring raceway surface 11A of rolling bearing ring 11 is about 10 µm. Rolling bearing ring raceway surface 11A has a surface roughness Ra equal to or less than 0.15 µm.

Needle roller 12 is composed of steel and has a roller rolling contact surface 12A at an outer circumferential surface. As shown in Fig. 1, needle roller 12 is disposed between the pair of rolling bearing rings 11 such that roller rolling contact surface 12A is in contact with rolling bearing ring raceway surface 11A.

Cage 13 is composed, for example, of a resin, and retains a plurality of needle rollers 12 at a prescribed pitch in the circumferential direction of rolling bearing ring 11. More specifically, cage 13 has a plurality of pockets formed in an annular shape and provided at equal intervals in the circumferential direction. Cage 13 accommodates needle roller 13 in the pocket.

The plurality of needle rollers 12 are rollably retained by cage 13 on an annular raceway surface along the circumferential direction of rolling bearing ring 11. With the configuration as described above, thrust needle roller bearing 1 is configured such that a pair of rolling bearing rings 11 can rotate relative to each other. Rolling bearing ring 11 is manufactured by a method of manufacturing a rolling bearing ring according to the present embodiment, which will be described below.

### <Method of Manufacturing Rolling Bearing Ring 11>

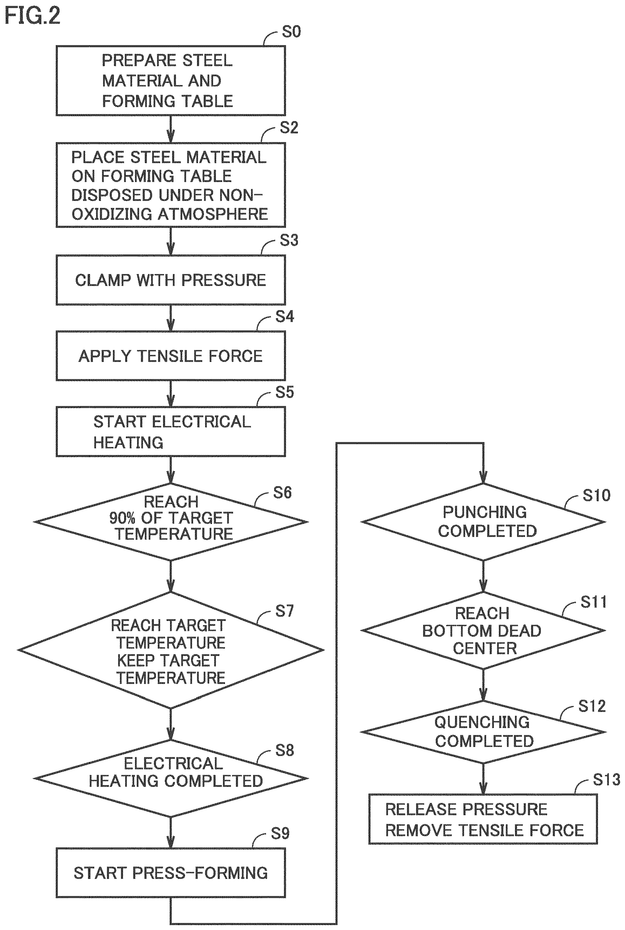

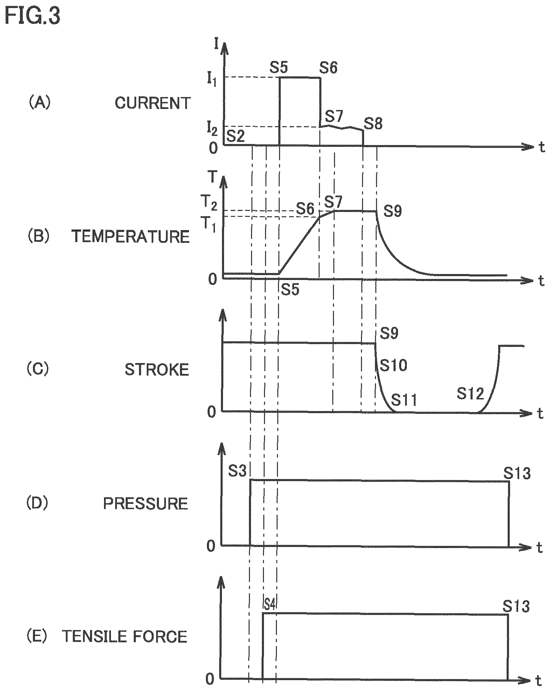

Referring to Figs. 2 to 13, a method of manufacturing a rolling bearing ring according to the present embodiment will now be described. Fig. 2 is a flowchart schematically showing the method of manufacturing a rolling bearing ring according to the present embodiment. Fig. 3 shows (A) change over time in current supplied to a steel material, (B) change over time in temperature of the steel material, (C) a stroke movement of a press machine, (D) an operation of a hydraulic chuck, and (E) operations of a first clamping portion and a second clamping portion, in the method of manufacturing a rolling bearing ring according to the present embodiment. The method of manufacturing a rolling bearing ring according to the present embodiment will be described below in the order of "S0 to S13" shown in Fig. 2 or Fig. 3 mainly with reference to the flowchart in Fig. 2 and the time chart in Fig. 3.

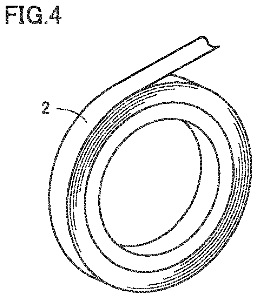

First, a steel material as a material for obtaining rolling bearing ring 11 is prepared (S0). Specifically, referring to Fig. 4, a coil material 2 as a steel material is prepared. As shown in Fig. 4, coil material 2 is formed in such a manner that a rolled steel material formed in a thin plate is wound in a coiled shape. The steel material wound to form coil material 2 has a main surface located on the inner circumferential side of coil material 2 in its circumferential direction and a main surface located on the outer circumferential side thereof. The steel material has a surface roughness Ra of 0.15 µm, for example.

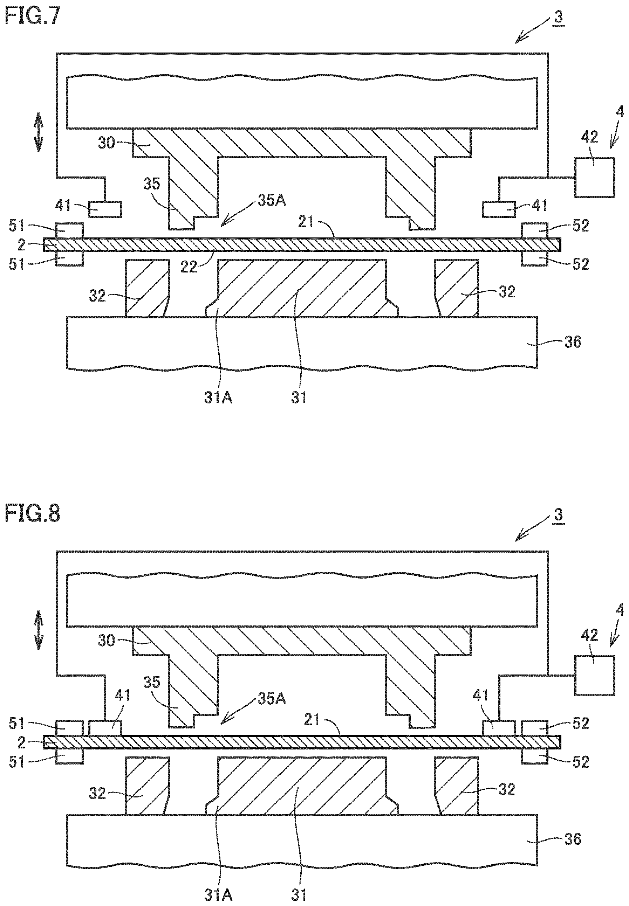

Coil material 2 is composed of steel containing 0.4 mass % or more of carbon, for example. More specifically, coil material 2 is composed, for example, of steel such as SAE1070 defined under SAE standards, S40C, S45C, S50C, S55C, and S60C defined under JIS as carbon steel for machine structural use, SUJ2 defined under JIS as high carbon chromium bearing steel, SK85 and SK95 defined under JIS as carbon tool steel, SCM440 and SCM445 defined under JIS as alloy steel for machine structural use, SKS5 defined under JIS as an alloy tool steel, SUP13 defined under JIS as a spring steel, or SUS440C defined under JIS as stainless steel. Coil material 2 is a steel material in a shape of a thin plate having a thickness equal to or less than 2 mm. Coil material 2 has one main surface 21 (see Fig. 7) and the other main surface 22 (see Fig. 7) located on the opposite side of one main surface 21.

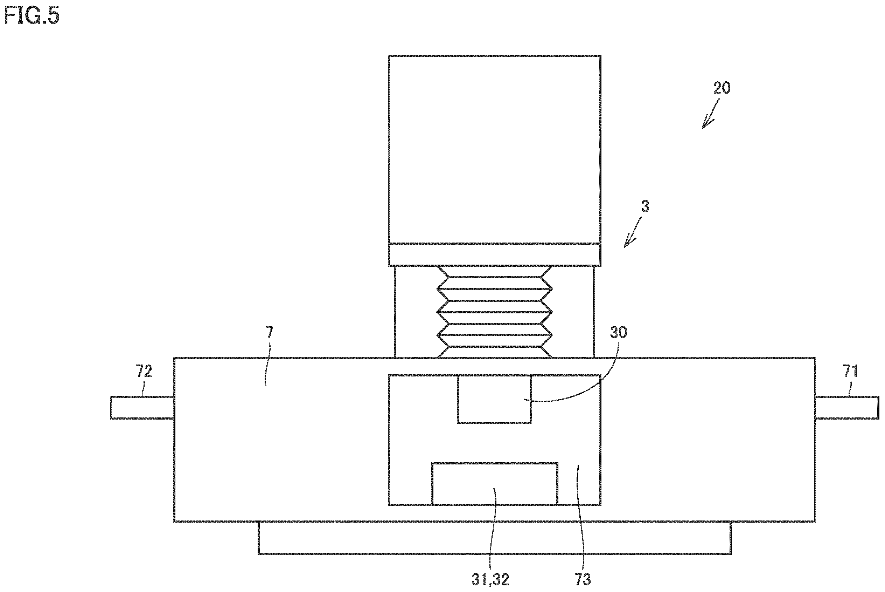

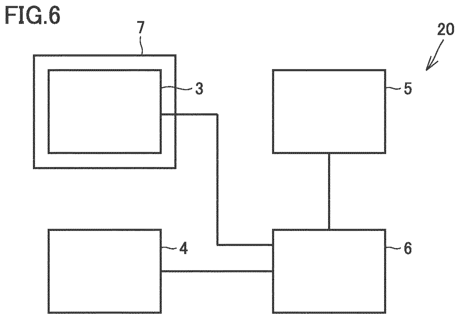

Furthermore, a machine part manufacturing apparatus 20 (see Fig. 6) for obtaining rolling bearing ring 11 from coil material 2 is prepared (S0). As shown in Figs. 5 and 6, machine part manufacturing apparatus 20 includes a forming table (work portion) 3, a heating portion 4, a tensile force applying portion 5, and a control portion 6 (which will be described later in detail). Work portion 3 is covered by a cover 7. A non-oxidizing atmosphere can be produced in the space inside cover 7. In this case, the non-oxidizing atmosphere is an atmosphere in which oxidation of a steel material can be suppressed, and the oxygen concentration is less than 0.01%. As long as the oxygen concentration is less than 0.01%, the non-oxidizing atmosphere only has to contain optional gas that is generally low in reactivity with a steel material, but this non-oxidizing atmosphere is a nitrogen atmosphere mainly containing nitrogen, for example.

Then, coil material 2 is placed on forming table (work portion) 3 (S2). Coil material 2 is placed, for example, such that main surface 21 is located on the press die 30 side in work portion 3. Then, machine part manufacturing apparatus 20 will be described with reference to Fig. 7. First, the configuration of work portion 3 will be described with reference to Fig. 7. Fig. 7 shows a cross-section along the up-down direction (the direction shown with a double-headed arrow in the figure) of work portion 3. Work portion 3 is formed as a press machine configured to punch a part of coil material 2 and rapidly cool the punched part of coil material 2 so as to be quenched. Work portion 3 mainly includes a press die 30, and forming dies 31 and 32.

Press die 30 has a cylindrical pressing portion 35. Pressing portion 35 serves as a portion that is brought into contact with coil material 2 so as to punch coil material 2. Pressing portion 35 also has a tip end portion that is cut out to form a recess portion 35A. Press die 30 is disposed to face forming dies 31 and 32 in the up-down direction. By a drive mechanism (not shown), press die 30 can be caused to make a stroke movement so as to move closer to forming dies 31 and 32 or to move away from forming dies 31 and 32.

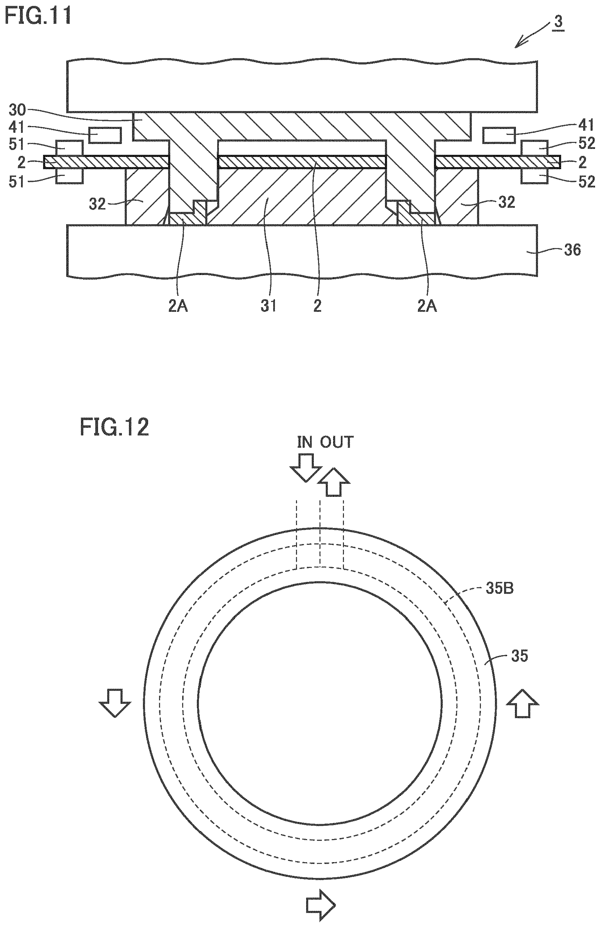

Fig. 12 shows pressing portion 35 in a plan view. As shown by a dashed line in Fig. 12, a water cooling circuit 35B serving as a passage for cooling water is provided inside pressing portion 35 along the circumferential direction. Fig. 12 shows an arrow showing the flow of cooling water. By circulating the cooling water so as to cool pressing portion 35 in this way, coil material 2 can rapidly be cooled (die quenched) when pressing portion 35 is brought into contact with coil material 2.

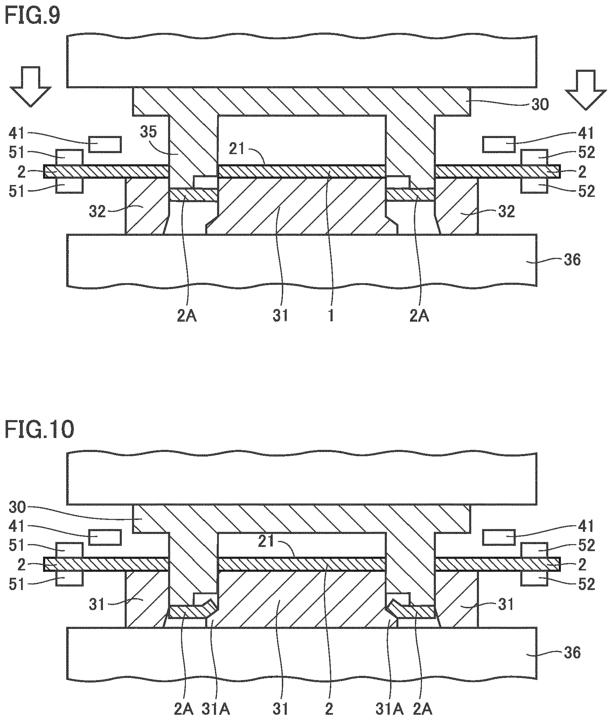

Referring to Fig. 7, forming dies 31 and 32 are arranged to face press die 30 in the up-down direction. As shown in Fig. 7, forming die 31 has a columnar shape and also has an outer circumferential portion provided with a protruding portion 31A protruding radially outward. Forming die 32 is formed in a ring shape greater in diameter than forming die 31. Forming die 32 is arranged outside forming die 31 such that a gap is provided between forming dies 31 and 32 in the radial direction. As shown in Fig. 9, when press die 30 makes a stroke movement toward forming dies 31 and 32, pressing portion 35 is located in the gap between forming dies 31 and 32.

Heating portion 4 serves to heat coil material 2 to the target temperature equal to or higher than an A₁ transformation point, which will be described later. Heating portion 4 is provided so as to be capable of heating coil material 2 by electrical heating, and mainly includes a power feed terminal 41 for feeding a direct current to coil material 2, and a DC stabilized power supply 42 connected to power feed terminal 41. Heating portion 4 can heat coil material 2 by causing a current to flow from DC stabilized power supply 42 through power feed terminal 41 into coil material 2. Power feed terminal 41 is located, for example, inside a first clamping portion 51 and a second clamping portion 52 which will be described later. Also, power feed terminal 41 is provided such that it can be brought into contact with the portion of coil material 2 to which tensile force is applied by first clamping portion 51 and second clamping portion 52. In DC stabilized power supply 42, it is preferable that the load regulation is equal to or less than 0.2% and the line regulation is equal to or less than 0.2%. In DC stabilized power supply 42, it is preferable that the sampling period is equal to or less than 10 ms. In addition, the load regulation shows a voltage fluctuation obtained when the load current is changed while keeping the input constant, and can be measured by measuring the voltage under the unloaded condition. The load regulation is expressed by (E₀ - E_{L})/E₀ × 100% assuming that the voltage under the unloaded condition is defined as E₀ and that the rated voltage under the rated load condition is defined as E_{L}. The line regulation shows an output voltage fluctuation obtained when the input voltage is changed, and can be measured by measuring the voltage of the load. The line regulation is expressed by (E_{R} - E_{M})/E_{M} × 100% assuming that the output voltage at the rated power supply voltage is defined as E_{R} and that the output voltage at the upper limit or the lower limit of the rated power supply voltage is defined as E_{M}. The sampling period is a reciprocal f[Hz] of a distance T[s] obtained by sampling by A-D conversion.

Tensile force applying portion 5 serves to apply tensile force to coil material 2 in at least one direction that extends along the surface of coil material 2. Tensile force applying portion 5 mainly includes first clamping portion 51 and second clamping portion 52. First clamping portion 51 and second clamping portion 52 are provided so as to be capable of fixing coil material 2 that is punched by work portion 3, and applying tensile force to coil material 2. Each of first clamping portion 51 and second clamping portion 52 is configured so as to allow switching between: the state where coil material 2 is held in the up-down direction; and the state where coil material 2 is not held. First clamping portion 51 and second clamping portion 52 each may have any configuration and may be a hydraulic clamp or an air clamp, for example.

First clamping portion 51 and second clamping portion 52 are positioned so as to face each other with press die 30 and forming dies 31 and 32 interposed therebetween in the extending direction of coil material 2. First clamping portion 51 is disposed on the side from which coil material 2 is supplied in the above-described extending direction. Second clamping portion 52 is disposed on the side from which coil material 2 is discharged in the above-described extending direction. In other words, at least a part of coil material 2 between the first portion held by first clamping portion 51 and the second portion held by second clamping portion 52 is disposed between press die 30 and forming dies 31, 32.

First clamping portion 51 and second clamping portion 52 are provided so as to be movable relatively in the direction in which first clamping portion 51 and second clamping portion 52 face each other (in the extending direction of coil material 2). For example, first clamping portion 51 and second clamping portion 52 each are a hydraulic clamp and include a hydraulic cylinder. Also, first clamping portion 51 and second clamping portion 52 are provided so as to be movable to be away from each other by the hydraulic cylinder in the direction in which first clamping portion 51 and second clamping portion 52 face each other. Thereby, first clamping portion 51 and second clamping portion 52 can apply tensile force, in the extending direction of coil material 2, to coil material 2 disposed between press die 30 and forming dies 31, 32. In other words, first clamping portion 51 and second clamping portion 52 are moved to be relatively away from each other in the direction in which first clamping portion 51 and second clamping portion 52 face each other, so that tensile force is applied to a portion of coil material 2 located between the first portion held by first clamping portion 51 and the second portion held by second clamping portion 52. In this case, tensile force means the stress in the extending direction of coil material 2.

First clamping portion 51 and second clamping portion 52 are provided, for example, so as to be capable of applying tensile force of 10 MPa to coil material 2. The tensile force applied to coil material 2 can be measured, for example, by using a load cell before the materials are set. Alternatively, the tensile force applied to coil material 2 can be measured by a load cell attached to the movable portion of the clamping device.

Control portion 6 serves to control heating portion 4. Control portion 6 is provided so as to be capable of controlling the output from heating portion 4 (the value of the current supplied from DC stabilized power supply 42 through power feed terminal 41 to coil material 2). Control portion 6 can lower the output from heating portion 4 before the temperature of coil material 2 heated by heating portion 4 reaches the target temperature, which will be described later. Control portion 6 may include a temperature measuring portion (not shown) for measuring the temperature of coil material 2. In this case, control portion 6 can lower the output from heating portion 4 at the time when the temperature of coil material 2 measured by the temperature measuring portion reaches a prescribed temperature that is lower than the above-described target temperature. Control portion 6 lowers the output from heating portion 4, for example, when the temperature of coil material 2 reaches the temperature equal to or higher than 80 % and equal to or lower than 95% of the above-described target temperature. Control portion 6 may be provided so as to be capable of controlling work portion 3. Control portion 6 may be provided so as to be capable of controlling tensile force applying portion 5. Control portion 6 may be provided so as to be capable of controlling the tensile force applied to coil material 2 by tensile force applying portion 5 in accordance with the output from heating portion 4 or the temperature of coil material 2 that is measured by the above-described temperature measuring portion.

Cover 7 includes a gas supply port 71 and a leak valve 72. Gas supply port 71 serves as a gas (for example, nitrogen gas) supply port through which a non-oxidizing atmosphere is produced in the space inside cover 7. Leak valve 72 is opened when the non-oxidizing atmosphere is changed into an air atmosphere. Machine part manufacturing apparatus 20 having the above-described configuration is prepared. The following steps (S3 to S13) performed in work portion 3 disposed inside cover 7 of machine part manufacturing apparatus 20 are performed under a non-oxidizing atmosphere. In other words, after coil material 2 is placed on forming table (work portion) 3, a non-oxidizing atmosphere is produced inside cover 7.

Then, coil material 2 is held by first clamping portion 51 and second clamping portion 52 in work portion 3 (S3). The pressure for holding coil material 2 is supplied to first clamping portion 51 and second clamping portion 52.

Then, tensile force is applied to coil material 2 (S4). Specifically, at least one of first clamping portion 51 and second clamping portion 52 is relatively moved so as to be away from the other clamping portion in the extending direction of coil material 2. Thereby, tensile force in accordance with the amount of relative movement of first clamping portion 51 and second clamping portion 52 (the amount of change in distance between first clamping portion 51 and second clamping portion 52) is applied to a region of coil material 2 that is located between respective portions held by first clamping portion 51 and second clamping portion 52. Tensile force applied to coil material 2 is greater than 0 MPa and less than 50 MPa, and preferably greater than 0 MPa and equal to or less than 30 MPa. The relative positional relation between first clamping portion 51 and second clamping portion 52 is maintained at least until press-forming (S9) ends. In other words, tensile force applied to coil material 2 is kept at least during a time period in which heating and press-forming are performed.

Then, electrical heating is started (S5). Specifically, referring to Fig. 8, power feed terminal 41 is first brought into contact with coil material 2. Then, a current is supplied to coil material 2 through power feed terminal 41. Thus, coil material 2 is heated by heat generation (Joule heat) resulting from supply of a current (electrical heating). At this time, a current value I1 (see Fig. 3) supplied to coil material 2 by DC stabilized power supply 42 can be set at a value at which coil material 2 can be heated to the target temperature in a short time period.

Then, after electrical heating is started and before the temperature of coil material 2 reaches the target temperature, the output from heating portion 4 is lowered (S6). Preferably, when the temperature of coil material 2 reaches the temperature equal to or higher than 80% and equal to or lower than 95% of the target temperature, control portion 6 lowers the value of the current supplied by DC stabilized power supply 42 to coil material 2. Lowered current value 12 (see Fig. 3) can be set at a value at which the temperature of coil material 2 can be raised to the target temperature and kept at the target temperature, and is controlled by control portion 6. Such current value 12 is supplied to coil material 2, so that the temperature of coil material 2 reaches the target temperature and is kept at the target temperature for a prescribed time period (S7). The value of the current supplied to coil material 2 during a time period in which the temperature of coil material 2 is kept at the target temperature may be changed, and for example, is controlled to be gradually lowered as shown in Fig. 3. Thus, electrical heating of coil material 2 is completed (S8).

The heating temperature (target temperature) of coil material 2 is a temperature equal to or higher than an A₁ transformation point of steel that forms coil material 2, and for example, 1000 °C. The "A₁ transformation point" refers to a point corresponding to a temperature at which the structure of steel starts transformation from ferrite to austenite when steel is heated. Therefore, the structure of steel that forms coil material 2 transforms to austenite as a result of electrical heating. Furthermore, temperature T1 at the time when the output from heating portion 4 is lowered is preferably set such that the temperature of coil material 2 is equal to or higher than 80 % and equal to or lower than 95% of the above-described target temperature, and also, temperature T1 is preferably equal to or higher than 800 °C and equal to or lower than 950 °C, for example, when the target temperature is 1000 °C. Furthermore, it is preferable that the overshoot of the temperature of coil material 2 heated by heating portion 4 is suppressed to be equal to or lower than 1% of the above-described target temperature.

The output from heating portion 4 from start to end of electrical heating may be feedback-controlled. For example, machine part manufacturing apparatus 10 includes a temperature measuring portion capable of measuring the temperature of coil material 2. Also, the output from heating portion 4 from start to end of electrical heating may be feedback-controlled based on the temperature of coil material 2 measured by the temperature measuring portion. Preferably, control of the output from heating portion 4 from start to end of electrical heating is set in advance as an output pattern in accordance with coil material 2 as a workpiece. For example, current value I1 supplied to coil material 2 from the start of power feed, the time at which the temperature of coil material 2 reaches the temperature equal to or higher than 80% and equal to or lower than 95% of the target temperature when current value I1 is supplied, a current value I2 at which the temperature overshoot can be suppressed to be equal to or less than 1% of the target temperature, the time at which the temperature of coil material 2 reaches the target temperature when current value I2 is supplied, and the retention time period at the target temperature are calculated in advance, and set as output patterns from heating portion 4. Thereby, the method of manufacturing a rolling bearing ring according to the present embodiment can reduce the manufacturing time period by the amount corresponding to the time period associated with feedback control (for example, several ms or more and several ten ms or less) as compared with the case where feedback control is performed, with the result that a high throughput can be achieved.

Then, press-forming of coil material 2 is started (S9). Specifically, referring to Fig. 9, press die 30 makes a stroke movement toward forming dies 31 and 32. Thus, as shown in Fig. 9, pressing portion 35 is brought into contact with coil material 2 and a part of coil material 2 is punched into a ring shape in the direction of thickness of coil material 2 (S10). A formed object 2A in a ring shape is thus obtained.

Then, referring to Fig. 10, as press die 30 makes a further stroke movement toward forming dies 31 and 32, the inner circumferential portion of formed object 2A is brought into contact with a protruding portion 31A of forming die 31. As press die 30 makes a stroke movement in this state, it reaches a bottom dead center (S11). Thus, referring to Fig. 11, the inner circumferential portion of formed object 2A is bent to be oriented in the direction of thickness of formed object 2A. Formed object 2A is thus subjected to forming in work portion 3.

Then, referring to Fig. 11, formed object 2A is held for a certain period of time while it is in contact with work portion 3 (press die 30, forming die 31, and a base portion 36). Here, cooling water is supplied to water cooling circuit 35B in press die 30 as described above (see Fig. 12). Thus, formed object 2A is rapidly cooled to a temperature equal to or lower than an Ms point, so that formed object 2A is quenched. The "Ms point (martensite transformation point)" refers to a point corresponding to a temperature at which conversion to martensite is started when steel which was converted to austenite is cooled. Consequently, the structure of steel that constitutes formed object 2A transforms into martensite. In this way, quenching (die-quenching) of formed object 2A is completed (S12). Finally, the pressure supplied to first clamping portion 51 and second clamping portion 52 for holding coil material 2 is released (S13). Then, coil material 2 obtained as a refuse material and formed object 2A of which quenching has been completed are taken out of work portion 3. At this time, tensile force applied to coil material 2 is relaxed (S13) by relaxing the clamping force between first clamping portion 51 and second clamping portion 52. Through the steps as described above, rolling bearing ring 11 is manufactured and the method of manufacturing a rolling bearing ring according to the present embodiment is completed.

### <Functions and Effects>

The method of manufacturing a rolling bearing ring according to the present embodiment includes: the step (S0) of preparing a steel material and a work portion 3 for obtaining a rolling bearing ring from the steel material; the step (S2) of placing the steel material on work portion 3; and the steps (S3 to S13) of obtaining the rolling bearing ring by heating the steel material on work portion 3 to a temperature equal to or higher than an A₁ transformation point, thereafter punching a part of the steel material into a ring shape, and thereafter quenching the steel material in a ring shape on work portion 3. The step of obtaining the rolling bearing ring is performed under a non-oxidizing atmosphere. In the step of obtaining the rolling bearing ring, heating and punching are performed in the state where tensile force is applied between the first portion and the second portion in the steel material that are spaced apart from each other with work portion 3 interposed therebetween in at least one direction along the main surface of the steel material.

In this way, the steps (S3 to S13) of obtaining the rolling bearing ring are carried out in the state where oxidation of the steel material is suppressed. Thus, according to the method of manufacturing a rolling bearing ring in the present embodiment, it becomes possible to obtain a rolling bearing ring in which formation of an oxide scale is suppressed.

Furthermore, in the step of obtaining the rolling bearing ring, heating and punching are performed in the state where tensile force is applied between the first portion and the second portion in the steel material that are spaced apart from each other with work portion 3 interposed therebetween in at least one direction along the main surface of the steel material. Accordingly, as compared with the case where the above-described heating and punching are performed in the state where tensile force is not applied to the steel material in the step of obtaining the rolling bearing ring, deformation of coil material 2 caused by heating can be reduced or suppressed, so that the working quality of the rolling bearing ring to be obtained can be improved.

Furthermore, the inventors of the present application have found that rolling bearing ring 11 obtained by the method of manufacturing a rolling bearing ring according to the present embodiment is less in surface roughness than the rolling bearing ring obtained by punching coil material 2 under the air atmosphere in the state where tensile force is applied as described above. The detailed mechanism of this finding is uncertain but inferentially considered by the inventors of the present application as follows. Specifically, when coil material 2 is heated under the oxygen-containing atmosphere to the target temperature equal to or higher than the A₁ transformation point, an oxide film (oxide scale) is formed on the surface of this coil material 2. Then, coil material 2 is applied with tensile force and pulled thereby. In this case, when the amount of pulling coil material 2 is greater than the thermal expansion amount of coil material 2, the oxide film is broken to produce a fracture surface on this oxide film, on which an oxide film is also further formed, with the result that protrusions and recesses are formed on the oxide film. As coil material 2 is punched in the state where such an oxide film is formed, the protrusions and recesses on the oxide film are transferred onto the base material under the oxide film of rolling bearing ring 11, so that large protrusions and recesses are formed on the surface of rolling bearing ring 11 from which the oxide film has been removed.

On the other hand, according to the method of manufacturing a rolling bearing ring in the present embodiment, coil material 2 is heated and punched inside cover 7 placed in the non-oxidizing atmosphere. Thus, when coil material 2 is punched, formation of a thick oxide film having large protrusions and recesses on the surface of coil material 2 is suppressed. Accordingly, it becomes possible to suppress an increase in surface roughness of rolling bearing ring 11 from which the oxide film has been removed, as compared with the steel material.

Furthermore, according to the method of manufacturing a rolling bearing ring in the present embodiment, since the steel material is heated under a non-oxidizing atmosphere to the temperature equal to or higher than the A₁ transformation point, formation of an oxide film by such heating is effectively suppressed. Thus, the method of manufacturing a rolling bearing ring according to the present embodiment does not need to include the step of removing an oxide film (oxide scale) formed on the surface of rolling bearing ring (formed object) 11. Consequently, it becomes possible to readily manufacture a rolling bearing ring in which an increase in surface roughness is suppressed as compared with a steel material.

In addition, it is preferable that, when coil material 2 is heated to the target temperature as described later, first clamping portion 51 and second clamping portion 52 apply tensile force to coil material 2, for example, so as to increase the distance between the first portion and the second portion in coil material 2 by the amount equal to or less than the thermal expansion amount between the first portion and the second portion therein. The thermal expansion amount between the first portion and the second portion in coil material 2 can be recognized as the amount obtained by multiplying the thermal expansion coefficient of coil material 2 (for example, 10 × 10 - 5/°C), a distance Lmm between the first portion and the second portion, and a temperature change ΔT °C after clamping of coil material 2. First clamping portion 51 and second clamping portion 52 are provided so as to be capable of applying tensile force, preferably, greater than 0 MPa and less than 50 MPa to coil material 2, and more preferably greater than 0 MPa and equal to or less than 30 MPa.

The method of manufacturing a rolling bearing ring according to the present embodiment is not limited to the above-described configuration.

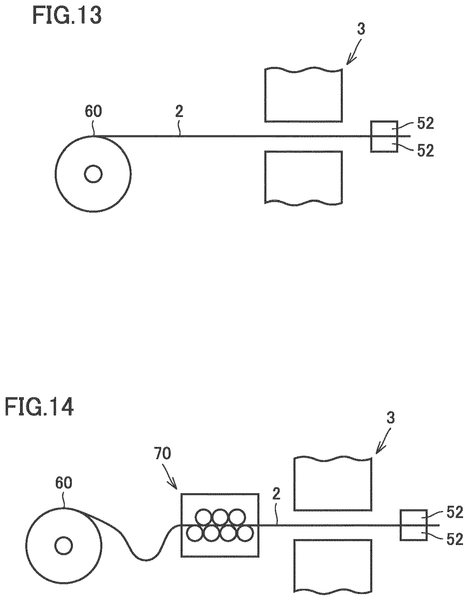

The method of applying tensile force to coil material 2 is not limited to the method of using first clamping portion 51 and second clamping portion 52 provided in the vicinity of press die 30 and forming dies 31, 32 in work portion 3. For example, in place of first clamping portion 51 in Fig. 7, a supply portion 60 (uncoiler) provided so as to be capable of supplying coil material 2 to work portion 3 as shown in Fig. 13 may be used, or a correction portion 70 (leveler) provided so as to be capable of correcting distortion of coil material 2 supplied from supply portion 60 to work portion 3 as shown in Fig. 14 may also be used. Also in this way, by driving at least one of second clamping portion 52 and both supply portion 60 and correction portion 70, tensile force can be applied to coil material 2 located between second clamping portion 52 and both supply portion 60 and correction portion 70.

Furthermore, for example, by the rewinding operation of supply portion 60, tensile force can be applied between two points in the extending direction of coil material 2 that is held by supply portion 60 and second clamping portion 52. Furthermore, for example, by moving second clamping portion 52 so as to be away from correction portion 70 in the extending direction of coil material 2, tensile force can be applied between two points in the extending direction of coil material 2 held by correction portion 70 and second clamping portion 52.

At least any method selected from the group consisting of electrical heating by an alternating current, indirect resistance heating, induction heating, contact heat transfer, and far-infrared heating can be adopted as the method of heating coil material 2, without being limited to electrical heating by a direct current. Each heating method will be described below in further detail.

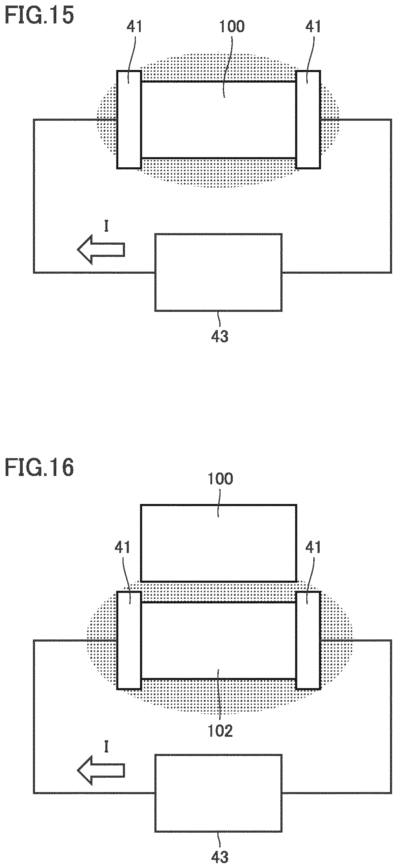

Referring to Fig. 15, in electrical heating, an object to be heated 100 (coil material 2) is heated with Joule's heat that is generated by causing a current to directly flow through object to be heated 100. Electrical heating by a direct current is implemented as described above. Meanwhile, in the case of electrical heating by an alternating current, an alternating current is supplied from the AC power supply through power feed terminal 41 to coil material 2, to produce Joule's heat, thereby heating coil material 2.

Referring to Fig. 16, in indirect resistance heating, object to be heated 100 disposed in the vicinity of a heat generator 102 is heated indirectly with Joule's heat that is generated by causing a current to flow through heat generator 102 having a prescribed resistance. In this case, a direct current may be supplied to heat generator 102 or an alternating current may be supplied to heat generator 102.

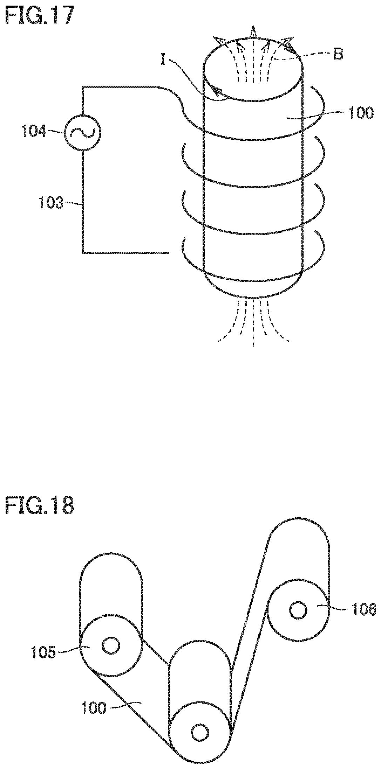

Referring to Fig. 17, in induction heating, an alternating current is supplied from an AC power supply 104 to a coil 103, so that an alternating magnetic flux B is produced in object to be heated 100. An eddy current I is produced in object to be heated 100 in the direction cancelling alternating magnetic flux B. Then, object to be heated 100 is heated by heat generation resulting from eddy current I and resistance R of object to be heated 100.

Referring to Fig. 18, in contact heat transfer, object to be heated 100 is heated by heat transfer from an internal heating roll 105 and an external heating roll 106. In far-infrared heating, far-infrared rays are applied to an object to be heated, thereby applying far-infrared energy to the object to be heated. Thus, activation of vibration between atoms that form the object to be heated causes heat generation, thereby heating the object to be heated.

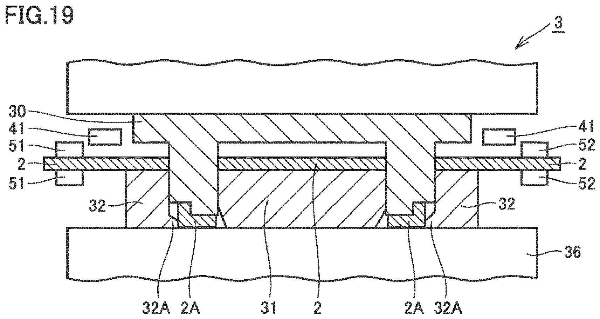

Also, in the method of manufacturing a rolling bearing ring according to the present embodiment, as shown in Fig. 11, the inner circumferential portion of formed object 2A is bent to be oriented in the direction of thickness of formed object 2A, so that formed object 2A is subjected to forming in work portion 3, without being limited thereto. Referring to Fig. 19, the outer circumferential portion (instead of the inner circumferential portion) of formed object 2A in a ring shape may be subjected to forming. In this case, a protruding portion 32A protruding radially inward is formed on the inner circumferential surface of forming die 32. Therefore, when press die 30 makes a stroke movement as in the above-described embodiment, the outer circumferential portion of formed object 2A in a ring shape is brought into contact with this protruding portion 32A. Then, press die 30 makes a stroke movement until it reaches the bottom dead center as in the above-described embodiment. Thus, as shown in Fig. 19, the outer circumferential portion of formed object 2A is bent to be oriented in the direction of thickness of formed object 2A. Also in this way, formed object 2A can be subjected to forming in work portion 3 before quenching. Thus, the effect as that in the above-described embodiment can be achieved.

It could be confirmed that, in rolling bearing ring 11 manufactured by the method of manufacturing a rolling bearing ring according to the present embodiment, an increase in surface roughness was suppressed and high working quality was achieved, as a result of evaluation as below.

### <Examples>

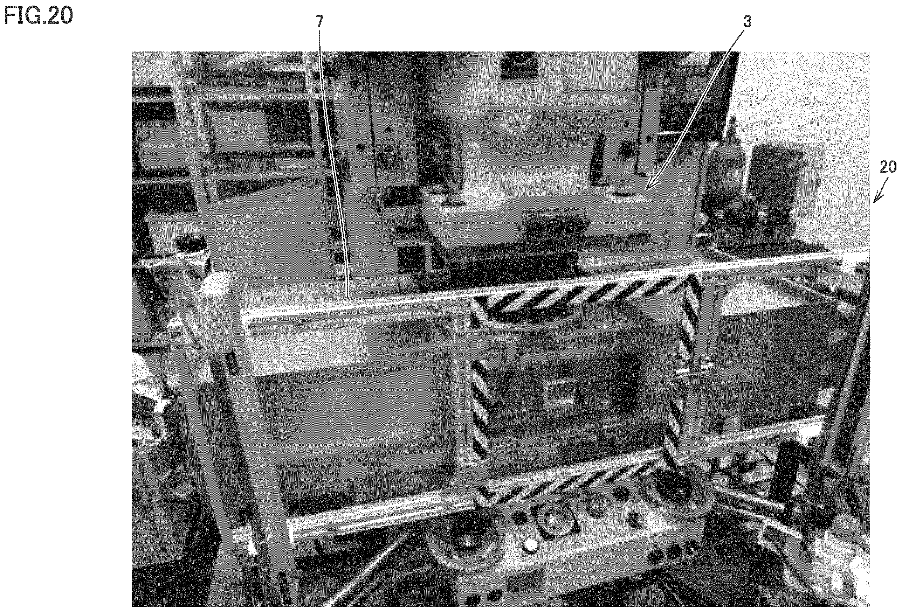

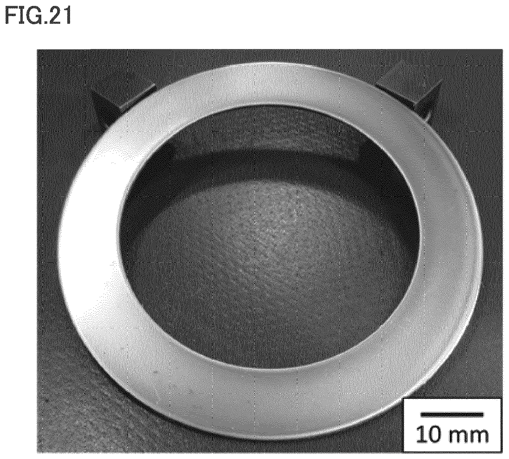

In an example, the method of manufacturing a rolling bearing ring according to the present embodiment was executed using a coil material 2 made of steel material SAE1070 and a machine part manufacturing apparatus shown in Fig. 20. The machine part manufacturing apparatus shown in Fig. 20 has the same configuration as that of machine part manufacturing apparatus 20 shown in Fig. 6. Specifically, a machine part manufacturing apparatus 20 including work portion 3 covered by cover 7 as shown in Fig. 5 was prepared. Then, nitrogen gas (N₂ gas) was supplied to the space inside cover 7, to produce a non-oxidizing atmosphere inside cover 7 at an oxygen concentration of 0.01% or less. Then, under this non-oxidizing atmosphere, in the state where tensile force of 10 MPa was kept applied to coil material 2 in the extending direction thereof, coil material 2 was electrically heated to the temperature of 1000 °C that is equal to or higher than the A₁ transformation point, and thereafter, subjected to die-quenching. In this way, rolling bearing ring 11 in the example as shown in Fig. 21 was obtained.

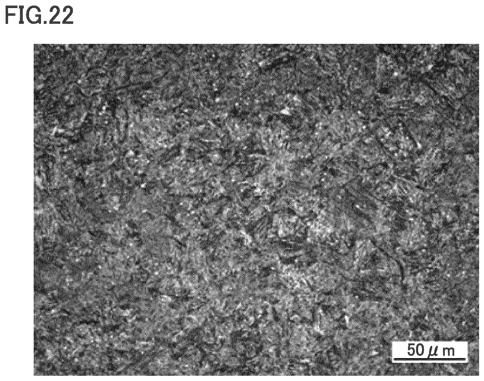

As a result of measuring the Vickers hardness of rolling bearing ring 11 (steel material: SAE1070) in the example manufactured in this way, the average hardness was approximately 790 HV. A part of rolling bearing ring 11 was cut, a cross-section thereof was corroded with nital, and the microstructure in the cross-section was observed with an optical microscope. Then, a martensite structure as in a photograph in Fig. 22 was observed. Also, surface roughness Ra of rolling bearing ring 11 was 0.13 µm.

Thus, it was confirmed that, according to the method of manufacturing a rolling bearing ring in the present embodiment, rolling bearing ring 11 high in hardness and working quality could be manufactured as a result of sufficient quenching.

Although the embodiments and examples according to the present invention have been described as above, the above-descried embodiments may also be variously modified. Also, the scope of the present invention is not limited to the above-described embodiments. The scope of the present invention is defined by the terms of the claims, and is intended to include any modifications within the meaning and scope equivalent to the terms of the claims.

### INDUSTRIAL APPLICABILITY

The method of manufacturing a rolling bearing ring according to the present invention may be particularly advantageously applicable to a method of manufacturing a rolling bearing ring, for which high working accuracy is required.

### REFERENCE SIGNS LIST

1 bearing, 2 coil material, 2A formed object, 3 work portion, 4 heating portion, 5 tensile force applying portion, 6 control portion, 7 cover, 10, 20 machine part manufacturing apparatus, 11 rolling bearing ring, 11A surface, 12A rolling contact surface, 13 cage, 21, 22 main surface, 30 press die, 31, 32 forming die, 31A protruding portion, 35 pressing portion, 35A concave portion, 35B water cooling circuit, 36 base portion, 41 power feed terminal, 42 DC stabilized power supply, 51 first clamping portion, 52 second clamping portion, 60 supply portion, 70 correction portion, 71 gas supply port, 72 leak valve, 100 object to be heated, 102 heat generator, 103 coil, 104 AC power supply, 105 internal heating roll, 106 external heating roll.

## Claims

1. A method of manufacturing a rolling bearing ring, the method comprising:
preparing a steel material and a forming table for obtaining the rolling bearing ring from the steel material;
placing the steel material on the forming table; and
obtaining the rolling bearing ring by heating the steel material on the forming table to a temperature equal to or higher than an A₁ transformation point, thereafter punching a part of the steel material into a ring shape, and thereafter quenching the steel material in a ring shape on the forming table,
in the obtaining the rolling bearing ring, the heating and the punching being performed in a state where oxidation of the steel material is suppressed, and in a state where tensile force is applied between a first portion and a second portion in the steel material that are spaced apart from each other with the forming table interposed therebetween in at least one direction along a surface of the steel material.

2. The method of manufacturing a rolling bearing ring according to claim 1, wherein,
in the obtaining the rolling bearing ring, the heating and the punching are performed under a non-oxidizing atmosphere in a state where tensile force is applied between the first portion and the second portion in the steel material that are spaced apart from each other with the forming table interposed therebetween in at least one direction along the surface of the steel material.

3. The method of manufacturing a rolling bearing ring according to claim 2, wherein, in the non-oxidizing atmosphere, an oxygen concentration is less than 0.1%.

4. The method of manufacturing a rolling bearing ring according to any one of claims 1 to 3, wherein, after the obtaining the rolling bearing ring, the rolling bearing ring has a surface roughness Ra of 0.15 µm or less.

5. The method of manufacturing a rolling bearing ring according to any one of claims 1 to 4, wherein the steel material contains 0.4 mass% or more of carbon and has a thickness of 2 mm or less.

6. The method of manufacturing a rolling bearing ring according to any one of claims 1 to 5, wherein the rolling bearing ring having a hardness of 700 HV or more is obtained.

7. The method of manufacturing a rolling bearing ring according to any one of claims 1 to 6, wherein
the steel material in a ring shape on the forming table is subjected to forming before the quenching, and
in the forming, an inner circumferential portion or an outer circumferential portion of the steel material in a ring shape is bent to be oriented in a direction of thickness of the steel material in a ring shape.
